Europäisches Patentamt

(19) European Patent Office

Office européen des brevets

(11) Publication number: **0 235 946**
**A1**

## (12) EUROPEAN PATENT APPLICATION

(21) Application number: 87300895.7

(22) Date of filing: 02.02.87

(51) Int. Cl.⁴ **G01S 7/28** , G01S 7/06 , G01S 13/02

(30) Priority: 01.02.86 GB 8602527

(43) Date of publication of application:
09.09.87 Bulletin 87/37

(84) Designated Contracting States:
DE FR GB IT NL

(71) Applicant: BRITISH AEROSPACE PUBLIC
LIMITED COMPANY
11 Strand
London WC2N 5JT(GB)

(72) Inventor: Dewhirst, Clifford §BRITISH
AEROSPACE PUBLIC LTD.
Army Weapons Division Six Hills Way
Stevenage Herts SG1 2DA(GB)

(74) Representative: Dowler, Edward Charles
British Aerospace Public Limited Company
Corporate Patents Department Brooklands
Road
Weybridge Surrey, KT13 OSJ(GB)

(54) **Target recognition.**

(57) Target recognition apparatus in which samples
of several discriminants extracted from a viewed
scene, for example phase, polarisation, RCS ('radar
cross-section' or amplitude) and range channel com-
ponents of a received radar return, are applied in
series to a shift register (2 to 8 inclusive) from which
discriminant sets are presented in parallel to a mem-
ory (elements 16, 17, 18) containing a multi-dimen-
sional look-up table of which the data items are
indicative of whether or not respective combinations
of discriminant values are representative of targets.
A series of look-up tables (in elements 9 to 15) may
be provided to give effective non-linear quantisation
and/or range adaptation of the different discriminants
with a view to optimising system efficiency.

EP 0 235 946 A1

## TARGET RECOGNITION

This invention relates to apparatus for receiving a series of signals representative of discriminants sensed by a detection or surveillance system, for example a radar system, and for detecting or recognising the presence of a target within the scene viewed by the system.

According to the invention there is provided target recognition apparatus comprising input means for supplying a multiplexed sequence of digital signals representing samples of a plurality of discriminants sensed by an associated sensor means, shift register means for receiving said digital signals and for presenting the signals representing respective ones of the discriminants in parallel at respective associated ones of a plurality of outputs of the shift register means, and memory means having a plurality of address inputs connected to said shift register outputs and containing a look-up table of data, the items of data in the table being indicative of whether or not respective combinations of the discriminant sample values presented by the shift register means are indicative of the presence of a target.

The discriminants could be polarisation, phase and/or range channel component signals obtained from a radar target detector.

At least in the case where the discriminants comprise a series of radar range channel signals, the apparatus preferably includes first memory means interposed between the outputs of the shift register means and the address inputs of a further memory means, the further memory means containing said look-up table of data and the first memory means containing a series of look-up tables adapted to respective associated ones of the range channels and operable to render non-linear the quantization of the signals passed to the address inputs of the further memory means and thereby improve the entropy flow of the data through the apparatus.

For a better understanding of the invention, reference will now be made, by way of example, to the accompanying drawings, in which:

figure 1 is a simplified diagram of target recognition apparatus for use in association with a radar target detector having seven range channels.

figure 2 is a diagram showing the average distribution of amplitudes in the range channels of a radar target detector, and

figure 3 is a diagram for illustrating a modification of the figure 1 apparatus.

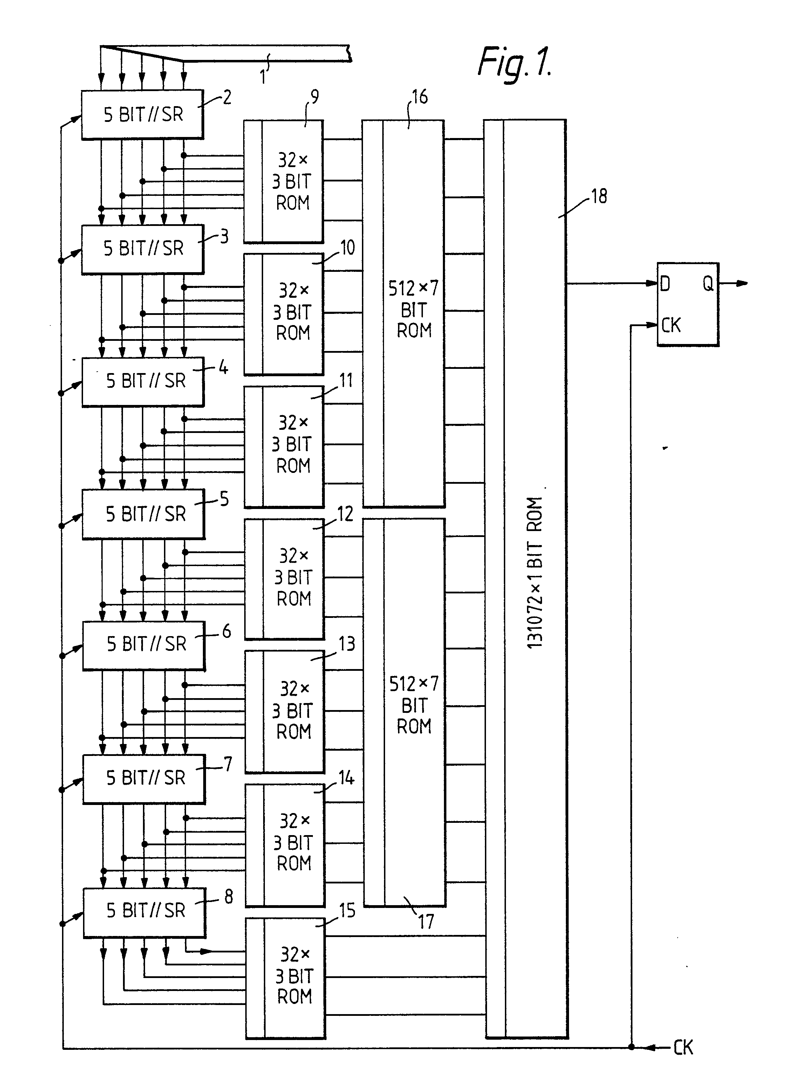

The target recognition system of figure 1 is for use with a radar target detector system (not shown) having seven range channels. Successive five parallel bit digital samples are taken of each channel signal and the samples from all the channels are then multiplexed onto a data highway 1 leading to the first of a series of seven five-bit parallel latches 2 to 8 which are interconnected, one with another, to form a five bit parallel by seven bit serial shift register. Under the control of a clock signal CK, the first sample from the first range channel in the multiplexing sequence is latched into the first latch 2, then this first sample from the first channel is transferred to the second latch 3 while the first latch 2 receives the first sample from the second range channel, then the content of latches 2 and 3 are transferred to latches 3 and 4 respectively while latch 2 receives the first sample from the third range channel, and so on. After seven clock pulses have been received, the seven latches 2 to 8 hold the first samples from the seven range channels and then, at the next clock pulse, the second sample from the first channel is latched into latch 2, and so on.

The parallel bit outputs of each of the latches 2 to 8 are connected to respective address inputs of respective ones of seven read-only memory devices 9 to 15 each of which has a capacity of thirty-two three-bit words. The three data outputs of each of the first three of the devices, i.e. the devices 9, 10 and 11, are connected to respective ones of the nine address inputs of a 512 x 7-Bit read-only memory 16. Similarly, the three data outputs of each of another three of the devices, namely 12, 13 and 14, are fed to respective address inputs of another 512 x 7-Bit read-only memory 17. The seven data outputs of memory 16, the seven data outputs of memory 17, and the three data outputs of memory device 15 are applied to respective ones of the seventeen address inputs of a 131,072 x 1-Bit read-only memory 18. Finally, the single data output of the memory 18 is fed to a D-type bistable 19 which also receives the clock signal CK.

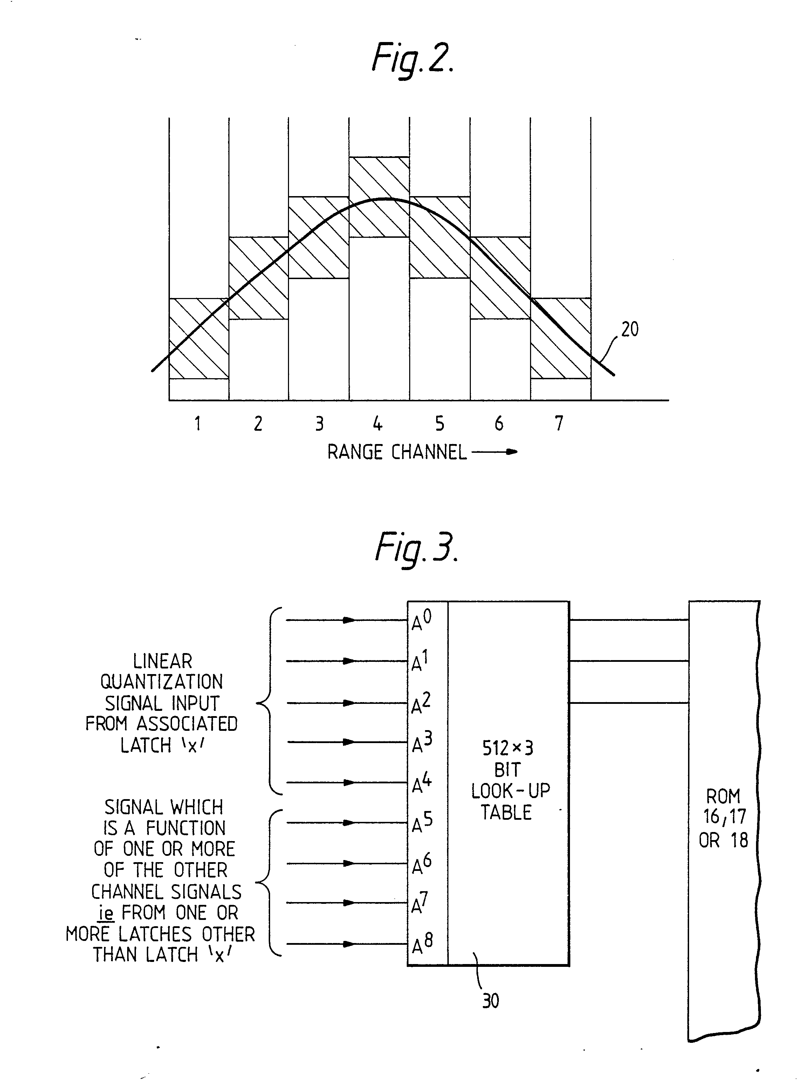

When a target is centred in the range area discriminated by the range channels of the target detector, the distribution of channel signal amplitudes over the range channels will, on average, be somewhat as shown by the line 20 in figure 2. Namely, the amplitudes of the samples in the centre or fourth channel will be greater, in general, than those of the third and fifth channels, the amplitudes in the third and fifth channels will be higher, on average, than those in the second and sixth channels and so on. If, as is assumed, the channels are all linearly quantized over the same amplitude range prior to multiplexing onto the highway 1, then the efficiency of the figure 1 recognition system can be improved by introducing a non-linear function into the quantization. This is carried out by the read-only memory devices 9 to 15. Each of these contains a look-up table of values adapted to the respective channel and operable to convert each five-bit sample in that channel to a non-linearly quantized three-bit signal with at least most of its quantization levels concentrated around the expected average amplitude for the channel as shown by the shaded areas in figure 2.

The data outputs from the devices 9 to 15 are used to address look-up tables contained in the memories 16, 17 and 18, the bit values of the look-up tables being such that, for any combination of signal values from the devices 9 to 15 which signify a target, the output from memory 18 has a first binary value while, for other combinations of values, the output of memory 18 has the other binary value. The output value from memory 18 is then clocked into the bistable 19 so that its output indicates whether or not a target has been found.

The contents of the look-up tables in the memories 16, 17 and 18 are determined experimentally, i.e. the target detector system is caused to look at various scenes some containing and some not containing targets of the kind which are to be recognised in order to determine for each possible combination of output values from the devices 9 to 15, whether that combination does or does not represent a target. Naturally, there is a 'grey area', i.e. while some value combinations may definitely indicate the presence of a target and some other combinations may definitely indicate the absence of one, there will be a number of combinations which might represent a target or may represent only some confusingly similar non-target feature. For these combinations, however, the experiments will usually provide an indication of the probability that the combination truly represents a target and, given a predetermined allowable 'false alarm' rate for the system, the tables can be completed.

As will be realised, the memories 16, 17 and 18 with their respective look-up tables could be replaced by a single $2^{21}$ x 1-Bit memory. This may in fact be preferred if all the possible values of each three-bit word in the devices 9 to 15 are to be used, i.e. if the output from each device is to have eight possible values. Generally, it would be preferred possibly if the number of quantization levels at the output of each device is equal to $2^N$ where N is an integer equal to the number of bits of each word of the device. Where N is not an integer, however, then the efficiency of the system is improved, i.e. a reduced gate count for the same performance is achieved, by providing a series of look-up tables as shown. For example, say that the output from each of the devices 9 to 15 is only to have five possible quantization levels (which is the case for the embodiment shown). Three bit outputs from each device are still needed and, if the memories 16, 17 and 18 were replaced by a single memory, it would correspondingly require 21 or 3 x 7 address inputs and hence a capacity of $2^{21}$ bits. With the arrangement shown, the total memory capacity is 512 x 7 + 512 x 7 + 131072 Bits which comes to a lot less than $2^{21}$. In terms of efficiency, for the single memory case, each three address lines with five values used out of a possible total of eight has an efficiency of 5/8 so the overall efficiency is $(5/8)^7$ or about 3.7%. For the illustrated arrangement, the overall efficiency is - $(125/128)^2$ x 5/8 or about 60%.

The contents of the devices 9 to 15 are set so as to achieve the object of optimising the so-called 'entropy flow' through the quantization levels of the system. Although the arrangement of the devices 9 to 15 as shown in figure 1 can give a substantially improved performance than would be the case if they were not present, the desirable object of maximising the entropy flow may not be achievable with the figure 1 arrangement unless there is substantially zero cross-correlation of the range channel signals. If there is any significant cross-correlation of the channel signals, the figure 1 system may be modified by replacing each of the devices 9 to 15 by a 512 x 3 Bit read-only memory device 30, as shown in figure 3. This device has nine address inputs, five of which are connected to respective outputs of the respective associated one of the latches 2 to 8 of figure 1, while the other four address inputs are connected to receive a signal which is a function of the output of one or more of the other latches. Thus, the output from each device 30 becomes a function of the signals in two or more of the range channels and, with the data content of each device 30 suitably set, greater entropy flow can be achieved in spite of the channel cross-correlation.

It will be well appreciated that the number of bits of each channel sample received along highway 1 and correspondingly the number of stages of each latch 2 to 8, the number of quantization levels at each stage of the system, the number of range channels (and hence the number of latches) and so on are all given by way of example and can be varied as part of the overall design of the system.

The implementation of the gates and memory devices is also chosen as desired. Thus, by way of example only, the latches 2 to 8 in figure 1 could be implemented by suitably interconnected sets of D-type bistables. The read-only memories 16, 17 and 18 could be of the programmable or electrically-eraseable variety. As mentioned, the division of the overall look-up table function between the three memories 16, 17 and 18 is preferred in the case illustrated, given the chosen number of quantization levels within the devices 9 to 15, but is not essential and, for a different choice of quantization levels, may not be preferred even. For a simple system, the devices 9 to 15 could be discarded -for example, such a simple system could comprise little more than just a series of latches or bit-parallel shift registers connected similarly to the latches 2 to 8 and having their outputs connected to the address inputs of a single read-only memory containing the appropriate look-up table values.

Finally, as envisaged earlier herein, the discriminants tested by the system are not necessarily the several range channels of a radar target detector. Instead, the discriminants could include say the phase and/or polarisation components of a radar return and/or discriminants obtained by means of a sensor other than a radar system.

## Claims

1. Recognition apparatus comprising input means for supplying a multiplexed sequence of digital signals representing samples of a plurality of discriminants sensed by an associated sensor means, shift register means for receiving said digital signals and for presenting the signals representing respective ones of the discriminants in parallel at respective associated ones of a plurality of outputs of the shift register means, and memory means having a plurality of address inputs connected to said shift register outputs and containing a look-up table of data, the items of data in the table being indicative of whether or not respective combinations of the discriminant sample values presented by the shift register means are indicative of the presence of a target.

2. Apparatus according to claim 1, wherein said discriminants comprise one or more of polarisation, phase and range component signals received from a radar system.

3. Apparatus according to claim 1, wherein said discriminants comprise a series of radar range channel signals and the apparatus includes first memory means interpored between the outputs of said shift register means and the address inputs of a further memory means, the further memory means containing said look-up table of data and the first memory means containing a series of look-up tables adapted to respective associated ones of the range channels and operable to render non-linear the quantization of the signals passed to the address inputs of the further memory means and thereby improve the entropy flow of the data within the apparatus.

*Fig.1.*

## Fig.2.

RANGE CHANNEL ⟶

## Fig.3.

LINEAR
QUANTIZATION
SIGNAL INPUT
FROM ASSOCIATED
LATCH 'x'

$A^0$
$A^1$
$A^2$
$A^3$
$A^4$

SIGNAL WHICH
IS A FUNCTION
OF ONE OR MORE
OF THE OTHER
CHANNEL SIGNALS
ie FROM ONE OR
MORE LATCHES OTHER
THAN LATCH 'x'

$A^5$
$A^6$
$A^7$
$A^8$

512×3
BIT
LOOK-UP
TABLE

30

ROM
16,17
OR 18

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 725 928 (KLIMCHAK et al.) * Abstract; column 1: lines 5-10,30-55; column 2, lines 30-60; column 4, line 23 - column 5, last line * | 1,2 | G 01 S 7/28 G 01 S 7/06 G 01 S 13/02 |
| A | US-A-4 063 200 (MATTERN) * Abstract; column 1, lines 9-29; column 2, lines 11-26; column 2, line 47 - column 3, line 48 * | 1,2 | |
| A | US-A-3 964 064 (BRANDAO et al.) * Abstract; column 4, line 57 - column 7, last line; column 9, line 17 - column 11, line 59 * | 1,3 | |
| A | US-A-4 313 159 (SHOAP) * Abstract; column 1, lines 22-34; column 2, line 55 - column 8, last line * | 1,2 | TECHNICAL FIELDS SEARCHED (Int. Cl.4)  G 01 S G 06 K |
| A | EP-A-0 118 182 (PATTERN PROCESSING TECHNOLOGIES) * Abstract * | 1 | |
| A | US-A-3 737 852 (ROBINSON) * Abstract * | 1 | |
| A | US-A-3 167 738 (WESTERFIELD) | | |

--- -/-

The present search report has been drawn up for all claims

| Place of search | Date of completion of the search | Examiner |
|---|---|---|
| THE HAGUE | 04-05-1987 | OLDROYD D.L. |

| | DOCUMENTS CONSIDERED TO BE RELEVANT | | Page  2 |
|---|---|---|---|
| Category | Citation of document with indication, where appropriate, of relevant passages | Relevant to claim | CLASSIFICATION OF THE APPLICATION (Int. Cl.4) |
| A | US-A-4 470 048  (SHORT III) | | |
| | ----- | | |

**TECHNICAL FIELDS SEARCHED (Int. Cl.4)**

The present search report has been drawn up for all claims

| Place of search | Date of completion of the search | Examiner |
|---|---|---|
| THE HAGUE | 04-05-1987 | OLDROYD D.L. |